# EUROPÄISCHE PATENTSCHRIFT

(11) **EP 1 819 760 B1**
(45) Veröffentlichungstag und Bekanntmachung des Hinweises auf die Patenterteilung: **15.06.2011**
(21) Anmeldenummer: 05810889.5
(22) Anmeldetag: 26.11.2005
(51) Int. Cl.: C08J 9/40

(54) **MODIFIZIERTE OFFENZELLIGE SCHAUMSTOFFE UND VERFAHREN ZU IHRER HERSTELLUNG**
MODIFIED OPEN-CELL FOAMS AND METHOD FOR THE PRODUCTION THEREOF
MOUSSES A CELLULES OUVERTES MODIFIEES ET LEUR PROCEDE DE PRODUCTION

(30) Priorität: 29.11.2004 DE 102004057588; 24.01.2005 DE 102005003316
(43) Veröffentlichungstag der Anmeldung: 22.08.2007
(73) Patentinhaber: BASF SE, 67056 Ludwigshafen (DE)
(72) Erfinder: KARL, Ulrich, 67269 Grünstadt (DE); FRENZEL, Stefan, 68161 Mannheim (DE); SCHWENDEMANN, Volker, 67434 Neustadt (DE); STEINBRENNER, Ulrich, 67435 Neustadt (DE); LEININGER, Hartmut, 67434 Neustadt (DE)
(86) Internationale Anmeldenummer: PCT/EP2005/012662
(87) Internationale Veröffentlichungsnummer: WO 2006/058675

(56) Entgegenhaltungen:
- EP-A- 0 435 049
- EP-A- 1 205 511
- DE-A1- 1 911 643
- GB-A- 1 570 485
- GB-A- 2 145 940
- US-A- 4 178 161

## Beschreibung

Die vorliegende Erfindung betrifft ein Verfahren zur Herstellung von modifizierten offenzelligen Aminoplastschaumstoffen, dadurch gekennzeichnet, dass man
(a) offenzellige Aminioplastschaumstoffe mit einer Dichte im Bereich von 5 bis 500 kg/m³ und einem mittleren Porendurchmesser im Bereich von 1 µm bis 1 mm
(b) mit wässriger Formulierung von mindestens einer Verbindung der allgemeinen Formel I a bis I b kontaktiert 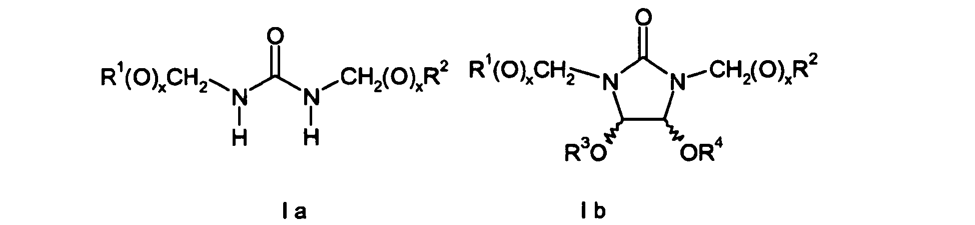 wobei die Variablen wie folgt gewählt sind:
   - R¹, R²: gleich oder verschieden und gewählt aus Wasserstoff, C₁-C₁₂-Alkyl, ver- zweigt oder unverzweigt, (-CH₂-CH₂-O)ₘ-R⁵, (-CHCH₃-CH₂-O)ₘ-R⁵, (-CH₂-CHCH₃-O)ₘ-R⁵, (-CH₂-CH₂-CH₂-O)ₘ-R⁵, (-CH₂-CH₂-CH₂-CH₂-O)ₘ-R⁵,
   - x: gleich oder verschieden und eine ganze Zahl gewählt aus null und eins, wobei in Formel I a mindestens ein x gleich 1 gewählt wird,
   - m: ist eine ganze Zahl im Bereich von 1 bis 20,
   - R³, R⁴: gleich oder verschieden und gewählt aus Wasserstoff, C₁-C₁₂-Alkyl, verzweigt oder unverzweigt, oder gemeinsam C₂-C₄-Alkylen
   - R⁵: gleich oder verschieden und gewählt aus C₁-C₄-Alkyl und Wasserstoff.

Weiterhin betrifft die vorliegende Erfindung die Verwendung erfindungsgemäßer modifizierter offenzelliger Schaumstoffe zur Herstellung von Reinigungsmaterialien, Filtern, Luftbefeuchtern, Wasserverteilern, Verpackungselementen, Schallschutzelementen wie vibrationshemmende Elemente oder Gebäudeisolierungen.

Schaumstoffe, speziell sogenannte offenzellige Schaumstoffe, finden Anwendungen in zahlreichen Anwendungen. Insbesondere offenzellige Schaumstoffe aus synthetischen Materialien haben sich als vielseitig erwiesen. Genannt seien beispielhaft Sitzkissen, Filtermaterialien, Klimaanlagen und Automobilteile, weiterhin Reinigungsmaterialien.

Bei Reinigungsmaterialien, die aus Schaumstoffen hergestellt werden, beobachtet man, dass sie nach verhältnismäßig kurzer Gebrauchszeit, beispielsweise nach etwa 10 Minuten, soweit zerstört sind, dass keine Putzwirkung mehr erzielt werden kann. Entsprechende Reinigungsmaterialien werden außerdem schnell unansehnlich. Hersteller von Reinigungsmaterialien wie beispielsweise Putzschwämmen empfehlen daher, Reinigungsmaterialien nach entsprechender und im Allgemeinen recht kurzer Gebrauchszeit, beispielsweise 10 Minuten, zu entsorgen, was für den Verbraucher nachteilig ist. Darüber hinaus werden empfindliche Oberflächen in vielen Fällen durch Kratzer, Abrasion oder Blindwerden beschädigt.

In US 6,608,118 wird vorgeschlagen, Schaumstoffe aus Melamin unter Hitzeeinwirkung zu komprimieren, beispielsweise für 4 Minuten bei 270°C zu komprimieren. Man erhält Schaumstoffe mit besseren mechanischen Eigenschaften, die sich beispielsweise leicht zerteilen lassen.

In der DE 19 11 643 wird ein Verfahren zur Modifizierung von Polyurethanschaumstoffen beschrieben, in dem Endgruppen-haltige PU-Schaumstoffe mit zur Aminoplastbildung befähigten Stickstoffverbindungen umgesetzt werden.

In EP 0 633 283 und DE 100 11 388 wird empfohlen, Melaminharzschaumstoffe zu verstärken, indem man sie beispielsweise mit einer Silikonemulsion imprägniert. Mit Silikonemulsion imprägnierte Schaumstoffe sind jedoch nicht als Reinigungsmaterialien zu gebrauchen, sie hinterlassen beim Gebrauch Schlieren. In DE 100 11 388 wird fernerhin empfohlen, Melaminharzschaumstoffe mit monomeren Fluoralkylestern zu besprühen, um sie ölabweisend zu machen.

In DE 102 20 896 wird vorgeschlagen, duroplastische Schaumstoffrohlinge mit chemisch inerten Bindern zu versetzen, die eine Klebekomponente enthalten. Aus DE 102 09 601 ist bekannt, dass man durch Zugabe von Säure zu duroplastischen Schaumstoffrohlingen wie beispielsweise Melaminharz oder Phenolharz oder auch Harnstoff oder Basen eine Hydrolyse, insbesondere eine säurekatalysierte Hydrolyse des Harzes bewirken kann.

Die technischen Eigenschaften der aus dem Stand der Technik bekannten Schäume bzw. Schaumstoffe lassen sich bezug auf Reinigungswirkung, Stabilität und Wasser- bzw. Ölaufnahme jedoch noch verbessern. Weiterhin haben sich die aus dem Stand der Technik bekannten Schäume als in vielen Fällen zu wenig flexibel erwiesen.

Es bestand daher die Aufgabe, Schaumstoffe bereit zu stellen, welche die Nachteile der aus dem Stand der Technik bekannten Materialien vermeiden. Es bestand weiterhin die Aufgabe, ein Verfahren zur Herstellung neuer Schaumstoffe bereit zu stellen. Außerdem bestand die Aufgabe, Verwendungen für Schaumstoffe bereit zu stellen, und es bestand die Aufgabe, Verfahren zur Verwendung von Schaumstoffen bereit zu stellen.

Demgemäß wurde das eingangs definierte Verfahren gefunden.

Das eingangs definierte Verfahren ist gekennzeichnet durch Verfahren zur Herstellung von modifizierten offenzelligen Aminoplastschaumstoffen, dadurch gekennzeichnet, dass man
(a) offenzellige Aminoplastschaumstoffe mit einer Dichte im Bereich von 5 bis 500 kg/m³ und einem mittleren Porendurchmesser im Bereich von 1 µm bis 1 mm
(b) mit wässriger Formulierung von mindestens einer Verbindung von mindestens einer Verbindung der allgemeinen Formel I a bis I b kontaktiert.

Im Rahmen der vorliegenden Erfindung kann dabei wässrige Formulierung für Lösungen, Emulsionen oder Dispersionen stehen.

Dabei handelt es sich bei mindestens einer Verbindung in Schritt (b) vorzugsweise um eine Verbindung, die nicht bei der Herstellung von unmodifiziertem Schaumstoff (a) eingesetzt wurde.

In einer Ausführungsform der vorliegenden Erfindung handelt es sich bei erfindungsgemäßen offenzelligen modifizierten Schaumstoffen um solche auf Basis von organischen Aminoplastschaumstoffen, beispielsweise aus Harnstoff-Formaldehyd-Harzen, weiterhin Schaumstoffen auf Basis von Phenol-Formaldehyd-Harzen und insbesondere Schaumstoffen auf Basis Aminoplast-Formaldehyd-Harzen, insbesondere Melamin-Formaldehyd-Harzen, wobei im Rahmen der vorliegenden Erfindung Schaumstoffe auf Basis von Melamin-Formaldehyd-Harzen auch als Melamin-Schaumstoffe bezeichnet werden.

Darunter ist zu verstehen, dass man erfindungsgemäße Schaumstoffe aus offenzelligen Schaumstoffen herstellt, die Aminoplastschaumstoffe umfassen und insbesondere Melamin-Schaumstoffe.

Die zur Ausübung des erfindungsgemäßen Verfahrens eingesetzten unmodifizierten offenzelligen Aminoplastschaumstoffe (a) werden im Rahmen der vorliegenden Erfindung ganz allgemein auch als unmodifizierte Schaumstoffe (a) bezeichnet. Die zur Ausübung des erfindungsgemäßen Verfahrens eingesetzten unmodifizierten offenzelligen Schaumstoffe (a) werden im Folgenden näher beschrieben.

Zur Ausübung des erfindungsgemäßen Herstellverfahrens geht man aus von offenzelligen Schaumstoffen (a), insbesondere von Schaumstoffen, in denen mindestens 50% aller Lamellen offen sind, bevorzugt 60 bis 100% und besonders bevorzugt 65 bis 99,9%, bestimmt nach DIN ISO 4590.

Als Ausgangsmaterial eingesetzte Schaumstoffe (a) sind vorzugsweise harte Schaumstoffe, das sind im Sinne der vorliegenden Erfindung Schaumstoffe, die bei einer Stauchung von 40% eine Stauchhärte von 1 kPa oder mehr aufweisen, bestimmt nach DIN 53577.

Als Ausgangsmaterial eingesetzte Schaumstoffe (a) haben eine Dichte im Bereich von 5 bis 500 kg/m³, bevorzugt 6 bis 300 kg/m³ und besonders bevorzugt im Bereich von 7 bis 300 kg/m³_{.}

Als Ausgangsmaterial eingesetzte offenzellige Schaumstoffe (a) können einen mittleren Porendurchmesser (Zahlenmittel) im Bereich von 1 µm bis 1 mm aufweisen, bevorzugt 50 bis 500 µm, bestimmt durch Auswertung mikroskopischer Aufnahmen an Schnitten.

In einer Ausführungsform der vorliegenden Erfindung können als Ausgangsmaterial eingesetzte offenzellige Schaumstoffe (a) maximal 20, bevorzugt maximal 15 und besonders bevorzugt maximal 10 Poren pro m² aufweisen, die einen Durchmesser im Bereich von bis zu 20 mm haben. Die übrigen Poren haben üblicherweise einen geringeren Durchmesser.

In einer Ausführungsform der vorliegenden Erfindung weisen als Ausgangsmaterial eingesetzte offenzellige Schaumstoffe (a) eine BET-Oberfläche im Bereich von 0,1 bis 50 m²/g auf, bevorzugt 0,5 bis 20 m²/g, bestimmt nach DIN 66131.

In einer Ausführungsform der vorliegenden Erfindung weisen als Ausgangsmaterial eingesetzte Schaumstoffe (a) einen Schallabsorptionsgrad von über 50 % auf, gemessen nach DIN 52215 bei einer Frequenz von 2000 Hz und einer Schichtdicke des betreffenden Schaumstoffs (a) von 50 mm.

In einer speziellen Ausführungsform der vorliegenden Erfindung weisen als Ausgangsmaterial eingesetzte offenzellige Schaumstoffe (a) einen Schallabsorptionsgrad von über 0,5 auf, gemessen nach DIN 52212 bei einer Frequenz von 2000 Hz und einer Schichtdicke des betreffenden Schaumstoffs (a) von 40 mm.

Als Ausgangsmaterial eingesetzte offenzellige Schaumstoffe (a) können beliebige geometrische Formen aufweisen, beispielsweise Platten, Kugeln, Zylinder, Pulver, Würfel, Flocken, Quader, Sattelkörper, Stangen oder runde, rechteckige oder quadratische Säulen. Die Größenabmessungen von als Ausgangsmaterial eingesetzten Schaumstoffen (a) sind unkritisch, sofern sie maschinell mechanisch komprimiert werden können. Bevorzugt werden Platten, Zylinder, Würfel, Quader oder rechteckige Säulen, die in üblichen Vorrichtungen mechanisch komprimiert werden können.

Erfindungsgemäß geht man von offenzelligen Aminoplast-Schaumstoffen (a) aus, bevorzugt Melamin-Schaumstoffen.

Als Ausgangsmaterial zur Durchführung des erfindungsgemäßen Herstellverfahrens besonders geeignete Melamin-Schaumstoffe sind als solche bekannt. Ihre Herstellung gelingt beispielsweise durch Verschäumung von
i) einem Melamin-Formaldehyd-Vorkondensat, das neben Formaldehyd weitere Carbonylverbindungen wie beispielsweise Aldehyde einkondensiert enthalten können,
ii) ein oder mehrere Treibmittel,
iii) einen oder mehrere Emulgatoren,
iv) einen oder mehrere Härter.

Melamin-Formaldehyd-Vorkondensate i) können unmodifiziert sein, sie können aber auch modifiziert sein, beispielsweise können bis zu 20 mol-% des Melamins durch andere an sich bekannte Durolastbildner ersetzt sein, beispielsweise alkylsubstituiertes Melamin, Harnstoff, Urethan, Carbonsäureamide, Dicyandiamid, Guanidin, Sulfurylamid, Sulfonsäureamide, aliphatische Amine, Phenol und Phenolderivate. Als weitere Carbonylverbindungen neben Formaldehyd können modifizierte Melamin-Formaldehyd-Vorkondensate beispielsweise Acetaldehyd, Trimethylolacetaldehy, Acrolein, Furfurol, Glyoxal, Phthaldialdehyd und Terephthaldialdehyd einkondensiert enthalten.

Als Treibmittel ii) sind geeignet: Wasser, inerte Gase, insbesondere Kohlendioxid, und sogenannte physikalische Treibmittel. Bei physikalischen Treibmitteln handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 110°C, insbesondere unter 80 °C. Zu den physikalischen Treibmitteln zählen auch inerte Gase, die in die Einsatzkomponente i) eingebracht bzw. in ihr gelöst werden, beispielsweise Kohlendioxid, Stickstoff oder Edelgase.

Als Emulgatoren iii) kann man übliche nicht-ionogene, anionische, kationische oder betainische Tenside einsetzen, insbesondere C₁₂-C₃₀-Alkylsulfonate, bevorzugt C₁₂-C₁₈-Alkylsulfonate und mehrfach ethoxylierte C₁₀-C₂₀-Alkylalkohole, insbesondere der Formel R⁶-O(CH₂-CH₂-O)ₓ-H, wobei R⁶ gewählt wird aus C₁₀-C₂₀-Alkyl und x beispielsweise eine ganze Zahl im Bereich von 5 bis 100 bedeuten kann.

Als Härter iv) kommen insbesondere saure Verbindungen in Frage, wie beispielsweise anorganische Brønstedsäuren, z.B. Schwefelsäure oder Phosphorsäure, organische Brønstedsäuren wie beispielsweise Essigsäure oder Ameisensäure, Lewissäuren und auch sogenannte latente Säuren.

Beispiele für geeignete Melamin-Schaumstoffe finden sich in EP-A 0 017 672.

Natürlich können als Ausgangsmaterial eingesetzte Schaumstoffe (a) Additive und Zuschlagstoffe enthalten, die in der Schaumstoffchemie üblich sind, beispielsweise Antioxidantien, Flammschutzmittel, Füllstoffe, Farbmittel wie beispielsweise Pigmente oder Farbstoffe und Biozide, beispielsweise

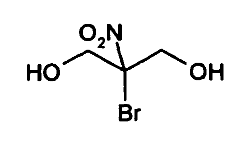

Weiterhin geht man zur Ausübung der vorliegenden Erfindung von mindestens einer Verbindung der allgemeinen Formel I a bis I b aus.

Im Folgenden werden eingesetzte Verbindungen der allgemeinen Formel I a bis I b auch kurz als Verbindung (b) oder als (b) bezeichnet. Verbindung (b) ist beispielsweise erhältlich durch Kondensation von mindestens einer Stickstoff-haltigen Verbindung (B1) und mindestens einer Carbonylverbindung (B2) und gegebenenfalls weiteren Verbindungen (B3) und gegebenenfalls weiteren Umsetzungen nach der Kondensation.

Beispiele für Stickstoff-haltige Verbindungen (B1) sind Harnstoff, N,N'-Dimethylharnstoff, Triazone, Tetrahydropyrimidinone, Imidazolinone, Tetrahydro-4H-1,3,5-oxadiazin-4-one, Alkylcarbamate, Methoxyethylcarbamate und (Meth)acrylsäuremethylolamid.

Beispiele für Carbonylverbindungen (B2) sind Ketone, insbesondere Di-(C₁-C₁₀-alkyl)ketone, bevorzugt Mono-, Di- und Polyaldehyde, insbesondere C₁-C₁₀-Alkylmonoaldehyde wie beispielsweise Acetaldehyd oder Propionaldehyd und ganz besonders bevorzugt Formaldehyd, weiterhin Dialdehyde wie beispielsweise Glyoxal oder Phthaldialdehyd wie beispielsweise 1,2-Phthaldialdehyd, Butandial, Glutardialdehyd und Hexan-1,6-dial.

Beispiele für besonders bevorzugte weitere Verbindungen (B3) sind ein- oder mehrwertige Alkohole wie beispielsweise C₁-C₁₀-Alkanole, insbesondere Methanol, Ethanol, n-Propanol und n-Butanol, weiterhin Ethylenglykol, Propylenglykol, Butylenglykol, 1,4-Butandiol, 1,6-Hexandiol, 1,12-Dodecandiol, Glycerin, Diethylenglykol, Dipropylenglykol, Polyethylenglykole mit im Mittel bis zu 200, bevorzugt von 3 bis zu 20 Ethylenoxideinheiten pro Molekül (Zahlenmittel), Polypropylenglykole mit im Mittel bis zu 200, bevorzugt von 3 bis zu 20 Propylenoxideinheiten pro Molekül (Zahlenmittel), Polytetrahydrofuran mit im Mittel bis zu 200, bevorzugt von 3 bis zu 20 1,4-Butandiol-einheiten pro Molekül (Zahlenmittel) sowie einfach C₁-C₁₀-Alkyl-verkappte Mono-, Di- oder Polyethylen- bzw. -propylenglykole mit im Mittel bis zu 200, bevorzugt von 3 bis zu 20 Alkylenoxideinheiten pro Molekül (Zahlenmittel).

Beispiele für weitere Umsetzungen nach der Kondensation sind Veresterungen, Veretherungen und radikalische (Co)polymerisationen.

In einer Ausführungsform der vorliegenden Erfindung kann man Verbindung (b) aus mindestens einer Stickstoff-haltigen Verbindung (B1), mindestens zwei Carbonylverbindungen (B2) und beispielsweise bis zu 3 verschiedenen weiteren Verbindungen (B3) herstellen.

In Verbindungen (b) der allgemeinen Formel I a bis I b 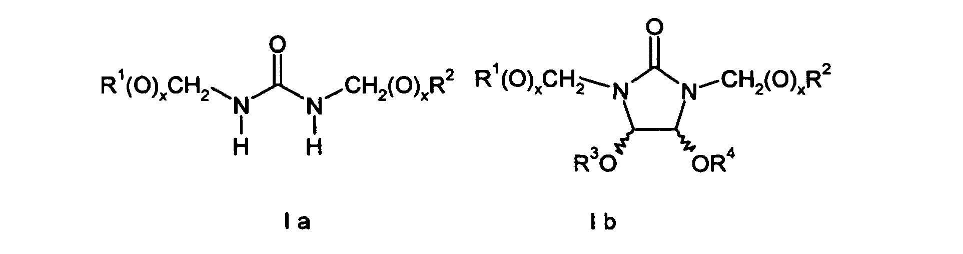 sind die Variablen wie folgt definiert:
- R¹, R²: verschieden oder vorzugsweise gleich und gewählt aus Wasserstoff, C₁-C₁₂-Alkyl, verzweigt oder unverzweigt, ausgewählt aus Methyl, Ethyl, n- Propyl, iso-Propyl, n-Butyl, iso-Butyl, sec.-Butyl, tert.-Butyl, n-Pentyl, iso- Pentyl, sec.-Pentyl, neo-Pentyl, 1,2-Dimethylpropyl, iso-Amyl, n-Hexyl, iso- Hexyl, sec.-Hexyl, n-Heptyl, iso-Heptyl, n-Octyl, n-Nonyl, n-Decyl und n- Dodecyl; bevorzugt C₁-C₆-Alkyl wie Methyl, Ethyl, n-Propyl, iso-Propyl, n- Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n- Butyl, iso-Butyl, sec.-Butyl und tert.-Butyl,
(-CH₂-CH₂-O)ₘ-R⁵, (-CHCH₃-CH₂-O)ₘ-R⁵, (-CH₂-CHCH₃-O)ₘ-R⁵, x (-CH₂-CH₂-O)ₘ-R⁵, (-CHCH₃-CH₂-O)ₘ-R⁵, (-CH₂-CHCH₃-O)ₘ-R⁵, (-CH₂-CH₂-CH₂-O)ₘ-R⁵, (-CH₂-CH₂-CH₂-CH₂-O)ₘ-R⁵, gleich oder verschieden und eine ganze Zahl gewählt aus null und eins, wobei in Formel I a mindestens ein x gleich eins gewählt wird; in Formel I b können beide x gleich null gewählt werden,
- m: ist eine ganze Zahl im Bereich von 1 bis 20,
- R³, R⁴: verschieden oder vorzugsweise gleich und gewählt aus Wasserstoff,
- C₁-C₁₂-: Alkyl, verzweigt oder unverzweigt, ausgewählt aus Methyl, Ethyl, n-Propyl, iso- Propyl, n-Butyl, iso-Butyl, sec.-Butyl, tert.-Butyl, n-Pentyl, iso-Pentyl, sec.- Pentyl, neo-Pentyl, 1,2-Dimethylpropyl, iso-Amyl, n-Hexyl, iso-Hexyl, sec.- Hexyl, n-Heptyl, iso-Heptyl, n-Octyl, n-Nonyl, n-Decyl und n-Dodecyl; bevorzugt C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso- Amyl, n-Hexyl, iso-Hexyl, sec.-Hexyl, besonders bevorzugt C₁-C₄-Alkyl wie Me- thyl, Ethyl, n-Propyl, iso-Propyl, n-Butyl, iso-Butyl, sec.-Butyl und tert.-Butyl, o- der gemeinsam C₂-C₄-Alkylen wie beispielsweise -CH₂-CH₂-, -(CH₂)₃- oder -(CH₂)₄-,
- R⁵: gleich oder verschieden und gewählt aus C₁-C₄-Alkyl wie Methyl, Ethyl, n- Propyl, iso-Propyl, n-Butyl, iso-Butyl, sec.-Butyl und tert.-Butyl
und insbesondere Wasserstoff.

Verbindungen (b) der allgemeinen Formel I a und I b sind an sich bekannt. Verbindungen (b) der allgemeinen Formel I a und I b liegen im Allgemeinen nicht rein gemäß einer definierten Formel vor; üblicherweise werden intermolekulare Umlagerungen der Reste R¹ bis R⁴, also beispielsweise Um-Aminali-sierungsreaktionen, und auch zu einem gewissen Grade Kondensationsreaktionen und Abspaltungsreaktionen beobachtet. Die oben angegebene Formel I a bzw. I b ist in dem Sinne zu verstehen, dass sie die stöchiometrischen Verhältnisse der Substituenten definiert und auch intermolekulare Umlagerungsprodukte und Kondensationsprodukte mit umfasst.

In einer Ausführungsform der vorliegenden Erfindung enthält in Schritt (b) eingesetzte wässrige Formulierung im Bereich von 1 bis 60 Gew.%, bevorzugt 10 bis 40 Gew.-% Verbindung (b).

Um unmodifizierte Schaumstoffe (a) mit Verbindung (b) zu kontaktieren, sind verschiedene Techniken denkbar.

Das Kontaktieren kann man beispielsweise bewerkstelligen durch Eintauchen von unmodifiziertem Schaumstoff (a) in wässrige Formulierung von Verbindung (b), durch Imprägnieren von unmodifiziertem Schaumstoff (a) mit wässriger Formulierung von Verbindung (b), durch Tränken von unmodifiziertem Schaumstoff (a) mit wässriger Formulierung von Verbindung (b), durch unvollständiges oder vorzugsweise vollständiges Besprühen von unmodifiziertem Schaumstoff (a) mit wässriger Formulierung von Verbindung (b), oder durch Aufkalandrieren von wässriger Formulierung von Verbindung (b) auf unmodifizierten Schaumstoff (a).

In einer anderen Ausführungsform der vorliegenden Erfindung geht man zur Ausübung des erfindungsgemäßen Verfahrens so vor, dass man wässrige Formulierung von Verbindung (b) auf unmodifizierten Schaumstoff (a) aufrakelt. Nach Tränken oder Aufrakeln oder Aufkalandrieren oder Besprühen kann zur gleichmäßigen Verteilung der Formulierung und Einstellen der gewünschten Konzentration zwischen mindestens zwei sich beispielsweise drehenden Walzen abgequetscht werden.

In einer Ausführungsform der vorliegenden Erfindung kann man im Anschluss an das Kontaktieren unmodifizierten Schaumstoff (a) und wässrige Formulierung von Verbindung (b) aufeinander einwirken lassen, beispielsweise über einen Zeitraum im Bereich von 0,1 Sekunden bis 24 Stunden, bevorzugt 0,5 Sekunden bis 10 Stunden und besonders bevorzugt 1 Sekunde bis 6 Stunden.

In einer Ausführungsform des erfindungsgemäßen Herstellverfahrens kontaktiert man unmodifizierten Schaumstoff (a) und wässrige Formulierung von Verbindung (b) bei Temperaturen im Bereich von 0°C bis 250°C, bevorzugt 5°C bis 190°C und besonders bevorzugt 10 bis 180°C.

In einer Ausführungsform des erfindungsgemäßen Herstellverfahrens kontaktiert man unmodifizierten Schaumstoff (a) und wässrige Formulierung von Verbindung (b) zunächst bei Temperaturen im Bereich von 0°C bis 50°C und ändert danach die Temperatur, beispielsweise erwärmt man auf Temperaturen im Bereich von 60°C bis 250°C, bevorzugt von 65°C bis 180°C.

In einer anderen Ausführungsform des erfindungsgemäßen Herstellverfahrens kontaktiert man unmodifizierten Schaumstoff (a) und wässrige Formulierung von Verbindung (b) zunächst bei Temperaturen im Bereich von 0°C bis 120°C und ändert danach die Temperatur, beispielsweise erwärmt man auf Temperaturen im Bereich von 30°C bis 250°C, bevorzugt von 125°C bis 200°C.

In einer bevorzugten Ausführungsform der vorliegenden Erfindung wählt man die Mengen der Einsatzstoffe unmodifizierte Schaumstoff (a) und wässriger Formulierung von Verbindung (b) so, dass erfindungsgemäßes Produkt eine deutlich höhere Dichte hat als der betreffende unmodifizierte Schaumstoff (a).

In einer Ausführungsform der vorliegenden Erfindung arbeitet man zur Durchführung des erfindungsgemäßen Verfahrens während des Kontaktierens von unmodifiziertem Schaumstoff (a) mit wässriger Formulierung von Verbindung (b) bei Atmosphärendruck. In einer anderen Ausführungsform der vorliegenden Erfindung arbeitet man zur Durchführung des erfindungsgemäßen Verfahrens unter erhöhtem Druck, beispielsweise bei Drücken im Bereich von 1,1 bar bis 10 bar. In einer anderen Ausführungsform der vorliegenden Erfindung arbeitet man zur Durchführung des erfindungsgemäßen Verfahrens unter erniedrigtem Druck, beispielsweise bei Drücken im Bereich von 0,1 mbar bis 900 mbar, bevorzugt bis 100 mbar.

In einer Ausführungsform der vorliegenden Erfindung kontaktiert man unmodifizierten Schaumstoff (a) mit wässriger Formulierung von Verbindung (b) so, dass Verbindung (b) möglichst gleichmäßig in allen Dimensionen über unmodifizierten Schaumstoff (a) verteilt wird. Geeignete Methoden sind Methoden mit einem hohen Auftragswirkungsgrad. Beispielhaft seien genannt: vollständiges Tränken, Tauchen, Fluten, Trommeln, Aufspritzen wie z.B. Druckluftspritzen, Airless-Spritzen, weiterhin Hochrotationszerstäubung, Beschichten, Aufrakeln, Aufkalandrieren, Bestreichen, Aufrollen, Aufwischen, Walzen, Schleudern, Zentrifugieren.

In einer anderen Ausführungsform der vorliegenden Erfindung kontaktiert man unmodifizierten Schaumstoff (a) mit wässriger Formulierung von Verbindung (b) so, dass man eine ungleichmäßige Verteilung von wässriger Formulierung von Verbindung (b) auf unmodifizierten Schaumstoff (a) bewirkt. So kann man in einer Ausführungsform der vorliegenden Erfindung beispielsweise unmodifizierten Schaumstoff (a) mit wässriger Formulierung von Verbindung (b) ungleichmäßig besprühen und anschließendes Einwirken lassen. In einer anderen Ausführungsform der vorliegenden Erfindung kann man unmodifizierten Schaumstoff (a) unvollständig mit wässriger Formulierung von Verbindung (b) tränken. In einer anderen Ausführungsform der vorliegenden Erfindung kann man einen Teil von unmodifiziertem Schaumstoff (a) einmal und einen anderen Teil von unmodifiziertem Schaumstoff (a) mindestens zweimal mit wässriger Formulierung von Verbindung (b) kontaktieren. In einer anderen Ausführungsform tränkt man unmodifizierten Schaumstoff (a) mit wässriger Formulierung von Verbindung (b) vollständig und spült die oberste Schicht mit beispielsweise Wasser wieder sauber. Anschließend lässt man einwirken. Dadurch beschichtet man unmodifizierten Schaumstoff (a) im Kern; die äußere Oberfläche bleibt unbeschichtet.

Wenn man unmodifizierten Schaumstoff (a) mit wässriger Formulierung von Verbindung (b) so kontaktiert, dass man eine ungleichmäßige Verteilung wässriger Formulierung von Verbindung (b) auf unmodifiziertem Schaumstoff (a) bewirkt hat, so erreicht man beispielsweise durch aufeinander einwirken lassen über einen Zeitraum von 2 Minuten oder mehr, dass nicht nur die äußerste Schicht von unmodifiziertem Schaumstoff (a) mit wässriger Formulierung von Verbindung (b) kontaktiert wird.

Wenn man unmodifizierten Schaumstoff (a) mit wässriger Formulierung von Verbindung (b) so kontaktiert, dass man eine ungleichmäßige Verteilung von wässriger Formulierung von Verbindung (b) auf unmodifiziertem Schaumstoff (a) bewirkt hat, so kann erfindungsgemäß modifizierter Schaumstoff über seinen Querschnitt uneinheitliche mechanische Eigenschaften aufweisen. So ist es beispielsweise möglich, dass erfindungsgemäß an den Stellen, an denen er mit größeren Anteilen an wässriger Formulierung von Verbindung (b) kontaktiert worden ist, weicher ist als an den Stellen, an denen er mit weniger wässriger Formulierung von Verbindung (b) kontaktiert worden ist.

In einer Ausführungsform der vorliegenden Erfindung kann man eine in manchen Fällen an sich nicht erwünschte ungleichmäßige Verteilung der wässrigen Formulierung von Verbindung (b) durch Kalandrieren an perforierten Walzen oder Lochblechen ausgleichen. Die Ausbildung einer ungleichmäßigen Verteilung von wässriger Formulierung von Verbindung (b) kann man dadurch verringern bevorzugt mindestens zwei perforierten Walzen, dass man eine Vakuumabsaugung an mindestens einer perforierten Walze bzw. mindestens einem Lochblech durchführt.

In einer speziellen Ausführungsform der vorliegenden Erfindung stellt man nach dem Kontaktieren durch Abquetschen zwischen zwei gegenläufig sich drehenden Walzen auf eine definierte Flottenaufnahme ein, beispielsweise im Bereich von 20 bis 800 Gew.-%, bezogen auf das Gewicht des unmodifizierten Schaumstoffs (a). Die Konzentration von Verbindung (b) in der Formulierung beträgt zwischen 1 und 99 Gew.-%.

In einer Ausführungsform der vorliegenden Erfindung kann man im Anschluss an das Kontaktieren spülen, beispielsweise mit einem oder mehreren Lösungsmitteln und bevorzugt mit Wasser.

In einer Ausführungsform der vorliegenden Erfindung kann man im Anschluss an das Kontaktieren und gegebenenfalls das Spülen trocknen, beispielsweise mechanisch durch z. B. Auswringen oder Kalandrieren, insbesondere durch Abquetschen durch zwei Rollen, oder thermisch, beispielsweise in Mikrowellenöfen, Heißluftgebläsen oder in Trockenschränken, insbesondere Vakuumtrockenschränken, wobei man Trockenschränke beispielsweise bei Temperaturen im Bereich von 30 bis 150°C betreiben kann. Unter Vakuum kann man im Zusammenhang mit Vakuumtrockenschränken einen Druck beispielsweise im Bereich von 0,1 bis 850 mbar verstehen.

Die Zeit, die man für gewünschtenfalls durchgeführte Trockenschritte aufwendet, gehört definitionsgemäß nicht zur Einwirkzeit im Sinne der vorliegenden Erfindung.

In einer Ausführungsform der vorliegenden Erfindung kann man thermisches Trocknen bewerkstelligen durch Erwärmen auf Temperaturen im Bereich von 20°C bis 150°C, beispielsweise über einen Zeitraum von 10 Sekunden bis 20 Stunden.

Zusätzlich zu wässriger Formulierung von Verbindung (b) kann man erfindungsgemäß unmodifizierten Schaumstoff (a) mit mindestens einem Katalysator (c) kontaktieren. Geeignet sind beispielsweise Metall- und Ammoniumsalze und anorganische oder organische Säuren. Geeignete Metallsalze sind beispielweise Metallhalogenide, Metallsulfate, Metallnitrate, Metalltetrafluoroborate, Metallphosphate oder deren Gemische. Beispiele sind Magnesiumchlorid, Magnesiumsulfat, Zinkchlorid, Lithiumchlorid, Lithiumbromid, Bortrifluorid, Aluminiumchlorid, Aluminiumsulfat, Alaune wie beispielsweise KAl(SO₄)₂·12 H₂O, Zinknitrat, Natriumtetrafluoroborat und Gemische der vorstehend beschriebenen Metallsalze.

Als Katalysator (c) geeignete Ammoniumsalze sind Ammoniumsalze aus der Gruppe Ammoniumchlorid, Ammoniumnitrat, Ammoniumsulfat, Ammoniumoxalat, Diammoniumphosphat oder Gemische der vorstehend beschriebenen Ammoniumsalze.

Als Katalysator (c) geeignete anorganische und organische Säuren sind Maleinsäure, Ameisensäure, Zitronensäure, Weinsäure, Oxalsäure, p-Toluolsulfonsäure, Salzsäure, Schwefelsäure, Borsäure und deren Gemische.

Natürlich kann man auch Mischungen von beispielsweise mindestens einem Metallsalz und mindestens einem Ammoniumsalz oder mindestens einem Metallsalz oder Ammoniumsalz und mindestes einer organischen oder anorganischen Säure als Katalysator (c) einsetzen.

Ganz besonders bevorzugt als Katalysator (c) sind Bronsted-saure Katalysatoren, beispielsweise ZnCl₂, Zn(NO3)₂, jeweils auch in Form ihrer Hydrate, NH₄Cl, MgSO₄, Al₂(SO₄)₃, jeweils auch in Form ihrer Hydrate, und ganz besonders bevorzugt MgCl₂, insbesondere in Form seines Hexahydrats.

Bezogen auf Verbindung (b) setzt man vorzugsweise ein Drittel bis ein Zwanzigstel des Gewichts an Katalysator (c) ein, bestimmt jeweils ohne gegebenenfalls vorhandenes Hydratwasser.

Bevorzugt werden Magnesiumchlorid, Zinkchlorid, Magnesiumsulfat, Aluminiumsulfat verwendet. Besonders bevorzugt ist Magnesiumchlorid.

In einer Ausführungsform der vorliegenden Erfindung kontaktiert man unmodifizierten Schaumstoff (a) mit wässriger Lösung von Verbindung (b) und gegebenenfalls Katalysator (c) bei einem pH-Wert im Bereich von 3,0 bis 7,5, wobei der gewünschte pH-Wert gegebenenfalls durch Zugabe von Säure, Lauge oder eines Puffers eingestellt werden kann. Die Verwendung eines Puffers wird bevorzugt.

In einer Ausführungsform der vorliegenden Erfindung kann man mindestens einen unmodifizierten Schaumstoff (a) nicht nur mit wässriger Formulierung von Verbindung (b) und gegebenenfalls Katalysator (c), sondern auch mit mindestens einem Zuschlagstoff (d) kontaktieren, gewählt aus

Bioziden, wie beispielsweise Silberpartikeln oder monomeren oder polymeren organischen Bioziden wie beispielsweise Phenoxyethanol, Phenoxypropanol, Glyoxal, Thiadiazine, 2,4-Dichlorbenzylalkohole und bevorzugt Isothiazolon-Derivate wie beispielsweise MIT (2-Methyl-3(2H)-isothiazolon), CMIT (5-Chlor-2-methyl-3(2H)-isothiazolon), CIT (5-Chlor- -3(2H)-isothiazolon), BIT (1 ,2-Benzisothiazol-3(2H)-on), weiterhin Copolymere von N,N-Di-C₁-C₁₀-Alkyl-ω-amino-C₂-C₄-alkyl(meth)acrylat, insbesondere Copolymere von Ethylen mit N,N-Di-Methyl-2-aminoethyl(meth)acrylat,
ein oder mehrere Tenside, die anionisch, kationisch oder nicht-ionisch sein können, Aktivkohle,
Farbmitteln wie beispielsweise Farbstoffen oder Pigmenten,
Riechstoffen wie beispielsweise Parfüm,
Hydrophobier- oder Oleophobiermittel, beispielsweise Fluorcarbonharze oder Fluorcarbonwachse,
Geruchsfänger, beispielsweise Cyclodextrine, und
Mikrokapseln, gefüllt mit mindestens einem Wirkstoff wie beispielsweise Pflegeöl, einem oder mehreren Bioziden, Parfüm, Geruchsfänger, wobei Mikrokapseln im Sinne der vorliegenden Erfindung beispielsweise sphärische innen hohle Teilchen mit einem mittleren Außendurchmesser im Bereich von 1 bis 100 µm sein können, die beispielsweise aus Melamin-Formaldehydharz oder aus Polymethylmethacrylat aufgebaut sein können.

Dazu kann man beispielsweise so vorgehen, dass man mindestens einen unmodifizierten Schaumstoff (a) in verschiedenen Arbeitsgängen oder vorzugsweise gleichzeitig mit wässriger Formulierung von Verbindung (b) und mit mindestens einem Zuschlagstoff (d) kontaktiert.

In einer Ausführungsform der vorliegenden Erfindung kann man wässriger Formulierung von Verbindung (b) einen oder mehrere Zuschlagstoffe (d) zusetzen, beispielsweise in Anteilen von 0 bis insgesamt 50 Gew.-%, bezogen auf (b), bevorzugt 0,001 bis 30 Gew.%, besonders bevorzugt 0,01 bis 25 Gew.-%, ganz besonders bevorzugt 0,1 bis 20 Gew.-%.

Zur Durchführung des erfindungsgemäßen Verfahrens kann man weiterhin nach dem Einwirkenlassen von wässriger Formulierung von Verbindung (b) und gegebenenfalls Katalysator (c) und gegebenenfalls mindestens einem Zuschlagstoff (d) auf unmodifiziertem Schaumstoff (a) ein- oder mehrfach mechanisch komprimieren. Das mechanische Komprimieren kann man diskontinuierlich oder vorzugsweise kontinuierlich durchführen, diskontinuierlich beispielsweise durch Pressen oder Platten, kontinuierlich beispielsweise durch Walzen oder Kalander. Wenn man zu kalandrieren wünscht, so kann man einen oder mehrere Kalanderdurchgänge durchführen, beispielsweise einen bis zwanzig Kalanderdurchgänge, bevorzugt sind fünf bis zehn Kalanderdurchgänge.

In einer Ausführungsform der vorliegenden Erfindung komprimiert man mechanisch auf einen Verdichtungsgrad im Bereich von 1 : 1,2 bis 1 : 20, bevorzugt 1 : 2,5 bis 1 : 10.

In einer Ausführungsform der vorliegenden Erfindung kalandriert man vor dem Trocknen.

In einer Ausführungsform der vorliegenden Erfindung geht man so vor, dass man nach dem Kontaktieren und Einwirkenlassen von wässriger Formulierung von Verbindung (b) und gegebenenfalls Katalysator (c) und gegebenenfalls mindestens einem Zuschlagstoff (d) zunächst trocknet, danach mit Wasser befeuchtet und danach mechanisch komprimiert, beispielsweise kalandert.

In einer anderen Ausführungsform der vorliegenden Erfindung geht man so vor, dass man nach dem Kontaktieren und Einwirkenlassen von wässriger Formulierung von Verbindung (b) und gegebenenfalls Katalysator (c) und gegebenenfalls mindestens einen Zuschlagstoff (d) zunächst trocknet, auf das Befeuchten verzichtet und danach mechanisch komprimiert, beispielsweise kalandert.

In einer Ausführungsform der vorliegenden Erfindung werden durch das mechanische Komprimieren nach dem Kontaktieren und Einwirkenlassen von wässriger Formulierung von Verbindung (b) und gegebenenfalls Katalysator (c) und gegebenenfalls mindestens einem Zuschlagstoff (d) die an sich harten unmodifizierten Schaumstoffe (a) weich und flexibel.

In einer Ausführungsform der vorliegenden Erfindung kann man nach dem Kontaktieren und Einwirkenlassen von wässriger Formulierung von Verbindung (b) und gegebenenfalls Katalysator (c) und gegebenenfalls mindestens einem Zuschlagstoff (d) auf unmodifiziertem Schaumstoff (a) thermisch fixieren, und zwar vor oder nach dem mechanischen Komprimieren oder auch zwischen zwei mechanischen Kompressionsschritten. Man kann beispielsweise bei Temperaturen von 120 °C bis 250 °C über einen Zeitraum von 5 Sekunden bis 120 Minuten thermisch fixieren. Geeignete Apparaturen sind beispielsweise Mikrowellenöfen, Plattenpresswerke, mit Heißluftgebläsen, elektrisch oder mit Gasflammen beheizte Trockenschränke, beheizte Walzwerke oder kontinuierlich betriebene Trockeneinrichtungen.

Man kann vor dem thermischen Fixieren trocknen, wie vorstehend beschrieben.

In einer Ausführungsform der vorliegenden Erfindung kann man nach dem Kontaktieren und Einwirkenlassen von wässriger Formulierung von Verbindung (b) und gegebenenfalls Katalysator (c) und gegebenenfalls mindestens einem Zuschlagstoff (d) auf unmodifiziertem Schaumstoff (a) thermisch fixieren, und zwar nach oder vorzugsweise vor dem mechanischen Komprimieren oder auch zwischen zwei mechanischen Kompressionsschritten. Man kann beispielsweise bei Temperaturen von 150°C bis 200°C über einen Zeitraum von 30 Sekunden bis 120 Minuten thermisch fixieren. Geeignete Apparaturen sind beispielsweise Trockenschränke.

In einer speziellen Ausführungsform kombiniert man das mechanische Komprimieren und das thermische Fixieren, beispielsweise indem man Schaumstoff nach dem Einwirkenlassen und gegebenenfalls dem Trocknen ein- oder mehrfach über heiße Walzen oder Kalander führt oder ein- oder mehrfach zwischen heiße Platten presst. Natürlich kann man auch mehrfach kalandern und dabei ein- oder mehrfach mit kalten Walzen und ein- oder mehrfach mit heißen Walzen komprimieren. Unter heiß sollen im Zusammenhang mit der vorliegenden Erfindung Temperaturen im Bereich von 100 bis 250°C, bevorzugt 120 bis 200°C verstanden werden.

Ein weiterer Gegenstand der vorliegenden Erfindung sind modifizierte Schaumstoffe, erhältlich nach dem erfindungsgemäßen Verfahren, die im Folgenden auch als erfindungsgemäße Schaumstoffe bezeichnet werden.

Erfindungsgemäße modifizierte Schaumstoffe haben eine Dichte im Bereich von 5 bis 1.000 kg/m³, bevorzugt 6 bis 500 kg/m³ und besonders bevorzugt im Bereich von 7 bis 300 kg/m³. Die Dichte des erfindungsgemäßen Schaumstoffs wird einerseits durch den Grad der Belegung mit Verbindung (b) und gegebenenfalls Katalysator (c) und gegebenenfalls mindestens einem Zuschlagstoff (d) beeinflusst und andererseits durch den Verdichtungsgrad des Ausgangsmaterials. Durch geeignete Wahl von Belegungs- und Verdichtungsgrad lassen sich Dichte und Härte oder Flexibilität wie gewünscht einstellen.

Erfindungsgemäße modifizierte Schaumstoffe enthalten vorzugsweise im Bereich von 0,1 bis 80 Gew.-%, bevorzugt 2 bis 60 Gew.-%, besonders bevorzugt 5 bis 50 Gew.-%, bezogen auf das Gewicht des entsprechenden unmodifizierten Schaumstoffs (a), an Feststoff aus (b).

Erfindungsgemäße modifizierte Schaumstoffe bzw. nach dem erfindungsgemäßen Verfahren hergestellte Schaumstoffe zeichnen sich durch insgesamt vorteilhafte Eigenschaften aus, die die vorstehend beschriebenen Nachteile wie kurze Gebrauchsdauer, Schädigung empfindlicher Oberflächen und unansehnliches Erscheinungsbild vermeiden. Sie zeigen verbesserte Putzleistung bzw. Reinigungswirkung, gute Hydrolysebeständigkeit, verbesserte Säurebeständigkeit, gute Schallabsorption und sind - beispielsweise wenn man sie zur Herstellung von Reinigungsmaterialien verwendet - besonders haltbar. Sie verschmutzen sehr langsam. Eventuell verschmutzte erfindungsgemäße Schaumstoffe lassen sich leicht zerstörungsfrei reinigen. Weiterhin zeichnen sich erfindungsgemäß modifizierte Schaumstoffe bzw. erfindungsgemäße modifizierte Schaumstoffe durch hohe Beständigkeit gegen Oxidationsmittel, insbesondere gasförmige Oxidationsmittel wie beispielsweise Ozon und Sauerstoff aus. Weiterhin sind erfindungsgemäße modifizierte Schaumstoffe sehr flexibel und lassen sich leicht mechanisch in gewünschte Formen bringen. Außerdem haben erfindungsgemäße modifizierte Schaumstoffe einen angenehmen tuchartigen Griff und sind besonders schonend bei der Reinigung empfindlicher Oberflächen.

Weiterhin sind erfindungsgemäße modifizierte Schaumstoffe für Verwendungen im Kosmetikbereich geeignet, beispielsweise als Tücher oder Pads zum Abschminken oder für Hygieneprodukte.

Besonders vorteilhaft sind die erfindungsgemäß modifizierten Schaumstoffe in allen Anwendungen, wo Flexibilität des Materials erforderlich ist.

Ein weiterer Gegenstand der vorliegenden Erfindung ist die Verwendung von erfindungsgemäßen modifizierten offenzelligen Schaumstoffen bzw. von erfindungsgemäß modifizierten offenzelligen Schaumstoffen zur Herstellung von Reinigungsmaterialien wie beispielsweise Putzschwämmen, Bürsten, Wischtücher, Wischmopps, Reinigungstüchern, Putzgranulat oder ölaufnehmenden Materialien, für beispielsweise manuelle oder-maschinelle Reinigung,
Reinigungsmaterialien in Form von fadenförmigen Materialien, gegebenenfalls im Verbund mit Fäden oder Drähten aus anderen Materialien wie beispielsweise Polyamid oder Metall, die in Form sogenannter Seelen zum Reinigen von beispielsweise Ösen, Ziehsteinen, Gewinden oder Wellen geeignet sind,
Filtern wie beispielsweise Luftfiltern, Teichfiltern, Aquarienfiltern, Wasserfiltern, oder auch als Matrix für keramische Filter,
Luftbefeuchtern, Wasserverteilern,
Verpackungselementen, insbesondere für schlag- oder wasserempfindliche Güter, Vibrations-hemmenden Elementen, Schallschutzelementen, Gebäudeisolierungen, insbesondere Dachisolierungen und Wandisolierungen,

Ein weiterer Gegenstand der vorliegenden Erfindung ist ein Verfahren zur Herstellung von Reinigungsmaterialien unter Verwendung von erfindungsgemäßen modifizierten Schaumstoffen bzw. von erfindungsgemäß modifizierten Schaumstoffen. Ein weiterer Gegenstand der vorliegenden Erfindung ist ein Verfahren zu Herstellung von Filtern unter Verwendung von erfindungsgemäßen modifizierten Schaumstoffen bzw. von erfindungsgemäß modifizierten Schaumstoffen. Ein weiterer Gegenstand der vorliegenden Erfindung ist ein Verfahren zur Herstellung von Luftbefeuchtern unter Verwendung von erfindungsgemäßen modifizierten Schaumstoffen bzw. von erfindungsgemäß modifizierten Schaumstoffen. Ein weiterer Gegenstand der vorliegenden Erfindung ist ein Verfahren zur Herstellung von kosmetischen Artikeln unter Verwendung von erfindungsgemäßen modifizierten Schaumstoffen bzw. von erfindungsgemäß modifizierten Schaumstoffen. Ein weiterer Gegenstand der vorliegenden Erfindung ist ein Verfahren zur Herstellung von Wasserverteilern unter Verwendung von erfindungsgemäßen modifizierten Schaumstoffen bzw. von erfindungsgemäß modifizierten Schaumstoffen. Ein weiterer Gegenstand der vorliegenden Erfindung ist ein Verfahren zur Herstellung von Verpackungselementen unter Verwendung von erfindungsgemäßen modifizierten Schaumstoffen bzw. von erfindungsgemäß modifizierten Schaumstoffen. Ein weiterer Gegenstand der vorliegenden Erfindung ist ein Verfahren zur Herstellung von Schallschutzelementen unter Verwendung von erfindungsgemäßen modifizierten Schaumstoffen bzw. von erfindungsgemäß modifizierten Schaumstoffen. Ein weiterer Gegenstand der vorliegenden Erfindung ist ein Verfahren zur Herstellung von Gebäudeisolierungen unter Verwendung von erfindungsgemäßen modifizierten Schaumstoffen bzw. von erfindungsgemäß modifizierten Schaumstoffen.

Wünscht man erfindungsgemäße modifizierte Schaumstoffe zur Herstellung von Filtern zu verwenden, so sind Schlauchfilter und Matrices von keramischen Filtern bevorzugt. Wünscht man erfindungsgemäße modifizierte Schaumstoffe zur Herstellung von Automobilteilen zu verwenden, sind insbesondere Belüftungseinheiten bevorzugt.

Ein weiterer Gegenstand der vorliegenden Erfindung sind Reinigungsmaterialien, Filter, Luftbefeuchter, kosmetische Artikel, Wasserverteiler, Verpackungselemente, Schallschutzelemente und Gebäudeisolierungen, hergestellt unter Verwendung von bzw. enthaltend erfindungsgemäße modifizierte Schaumstoffen bzw. erfindungsgemäß modifizierte Schaumstoffe.

Man kann erfindungsgemäße modifizierte Schaumstoffe beispielsweise mechanisch mit anderen Materialien verbinden, beispielsweise mit Stielen, Grundkörpern für beispielsweise Besen, mit Textilien, Leder, Polymeren wie beispielsweise Polyurethan oder Holz.

Man kann erfindungsgemäße modifizierte Schaumstoffe gut bedrucken, beispielsweise nach dem Ink-Jet-Verfahren oder mit Pigmentdruckpasten.

Erfindungsgemäße modifizierte Schaumstoffe lassen sich beispielsweise gut auf Träger aufbringen, die gebogen oder flach, starr oder flexibel sein können. Beispiele für Träger sind Trägergewebe, Trägerpapiere, Netze sowie Kunststoff- und Metallplatten. Als besondere Ausführungsform sei das Aufbringen auf Trägergewebe zur manuellen Anwendung genannt. Besonders gut lassen sich erfindungsgemäße modifizierte Schaumstoffe aufbringen auf Trägergewebe für Bandschleifmaschinen, Schwingschleifer und/oder Polierscheiben. Ein weiterer Gegenstand der vorliegenden Erfindung ist daher ein Verfahren zum Aufbringen von erfindungsgemäßen modifizierten Schaumstoffen auf Träger, die gebogen oder flach, starr oder flexibel sein können, insbesondere auf Trägergewebe oder auf Trägerpapiere. Erfindungsgemäßes Aufbringen kann beispielsweise erfolgen durch Aufkleben, Aufnähen oder Aufnieten.

Ein weiterer Gegenstand der vorliegenden Erfindung sind Verbunde, enthaltend mindestens einen erfindungsgemäßen modifizierten Schaumstoff und mindestens einen Träger, der beispielsweise gebogen oder flach, starr oder flexibel sein kann, beispielsweise ein Trägergewebe oder Trägerpapier. Ein weiterer Gegenstand der vorliegenden Erfindung ist die Verwendung von erfindungsgemäßen modifizierten Schaumstoffen, aufgebracht auf vorstehend genannte Träger, insbesondere auf Trägergewebe oder auf Trägerpapiere, als Werkzeug für Bandschleifmaschinen und Schwingschleifer oder zur manuellen Anwendung, beispielsweise als Polierscheiben.

Die Erfindung wird durch Arbeitsbeispiele erläutert.

### Arbeitsbeispiele

### I.1 Herstellung von unmodifiziertem Schaumstoff (a)

In einem offenen Gefäß wurde ein sprühgetrocknetes Melamin/Formaldehyd-Vorkondensat (Molverhältnis 1:3, Molekulargewicht etwa 500 g/mol) zu einer wässerigen Lösung mit 3 Gew.-% Ameisensäure und 1,5 % des Natriumsalzes eines Gemisches von Alkylsulfonaten mit 12 bis 18 C-Atomen im Alkylrest (Emulgator K 30 der Fa. Bayer AG), wobei die Prozentzahlen auf das Melamin/Formaldehyd-Vorkondensat bezogen sind, gegeben. Die Konzentration des Melamin/Formaldehyd-Vorkondensats, bezogen auf die gesamte Mischung aus Melamin/Formaldehyd-Vorkondensat und Wasser, betrug 74 Gew.%. Die so erhältliche Mischung wurde kräftig gerührt, dann wurden 20 Gew.-% n-Pentan zugegeben. Es wurde so lange (etwa 3 min lang) weitergerührt, bis eine homogen aussehende Dispersion entstand. Diese wurde auf ein teflonisiertes Glasgewebe als Trägermaterial aufgerakelt und in einem Trockenschrank, in dem eine Lufttemperatur von 150°C herrschte, aufgeschäumt und gehärtet. Dabei stellte sich als Massetemperatur im Schaumstoff die Siedetemperatur des n-Pentans ein, die unter diesen Bedingungen bei 37,0 °C liegt. Nach 7 bis 8 min war die maximale Steighöhe des Schaumstoffs erreicht. Der Schaumstoff wurde noch weitere 10 min bei 150 °C im Trockenschrank belassen; anschließend wurde er 30 min lang bei 180° C getempert. Man erhielt unmodifizierten Schaumstoff (a.1).

Es wurden am unmodifizierten Schaumstoff (a.1) aus Beispiel I.1 die folgenden Eigenschaften ermittelt:
99,6% offenzellig nach DIN ISO 4590,
Stauchhärte (40%) 1,3 kPa bestimmt nach DIN 53577,
Dichte 7,6 kg/m³ bestimmt nach EN ISO 845,
mittlerer Porendurchmesser 210 µm, bestimmt durch Auswertung mikroskopischer Aufnahmen an Schnitten,
BET-Oberfläche von 6,4 m²/g, bestimmt nach DIN 66131,
Schallabsorption von 93 %, bestimmt nach DIN 52215,
Schallabsorption von mehr als 0,9, bestimmt nach DIN 52212.

### I.2 Herstellung von erfindungsgemäßen modifizierten Schaumstoffen

Man schnitt unmodifizierten Schaumstoff (a.1) aus Beispiel I.1 zu Schaumstoffquadem mit den Abmessungen 9 cm·4 cm·4 cm. Die Schaumstoffquader wogen im Bereich von 1,00 bis 1,33 g. Anschließend kontaktierte man mehrere unmodifizierte Schaumstoffstücke mit einem Gewicht gemäß Tabelle 1 mit einer wässrigen Dispersion, enthaltend 81 g/l N,N'-Dimethyl-4,5-dihydroxyimidazolinon (I b.1) und 18 g/l MgCl₂·6 H₂O, 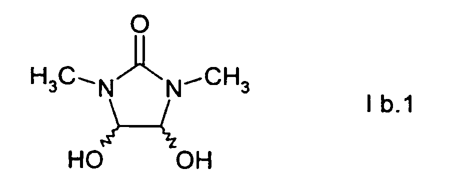 indem man je einen Schaumstoffquader vollständig in die wässrige Dispersion tauchte und 2 Minuten mit wässriger Dispersion bedeckt ließ. Anschließend entnahm man die Schaumstoffquader aus der betreffenden wässrigen Dispersion und quetschte überschüssige wässrige Dispersion ab, indem man durch zwei sich gegenläufig drehende Walzen führte, die einen Durchmesser von 150 mm und einen Abstand von 8 mm aufwiesen und sich mit einer Geschwindigkeit von 32 Umdrehungen/min drehten. Dadurch wurde eine Flottenaufnahme von 520 Gew.-% erreicht.

Danach trocknete man über einen Zeitraum von 4 Stunden bei 80°C im Trockenschrank. Anschließend wurde im Trockenschrank 10 Minuten bei 150 °C thermisch fixiert. Man erhielt erfindungsgemäßen modifizierten Schaumstoff S1.1.

### II. Herstellung von weiteren erfindungsgemäßen modifizierten Schaumstoffen

### II.1 Herstellung von erfindungsgemäßem modifiziertem Schaumstoff S1.2

Das Experiment gemäß 1.2 wurde wiederholt, jedoch kontaktierte man mit einer wässrigen Dispersion von
120 g/l (I b.1) und
57,8 g/l MgCl₂·6 H₂O.

Man entnahm die Schaumstoffquader 5 Sekunden nach dem Eintauchen, quetschte wie oben beschrieben ab und erreichte eine Flottenaufnahme von 540 Gew.-%. Anschließend fixierte man thermisch ohne vorheriges Trocknen 15 Minuten bei 150 °C im Trockenschrank.

Man erhielt erfindungsgemäßen modifizierten Schaumstoff S1.2.

### II.2 Herstellung von erfindungsgemäßem modifiziertem Schaumstoff S2.1

Man besprühte Quader (Abmessungen: 9 cm·4 cm·4 cm) von unmodifiziertem Schaumstoff (a.1) mit einer wässrigen Dispersion, enthaltend
112,5 g/l (I b.2) und
61,4 g/l MgCl₂·6 H₂O.

Man ließ 2 Minuten einwirken, quetschte anschließend wie unter 1.2 beschrieben ab und fixierte thermisch 20 Minuten bei 140°C im Trockenschrank. Man erreichte eine Flottenaufnahme von 425 Gew.-%.

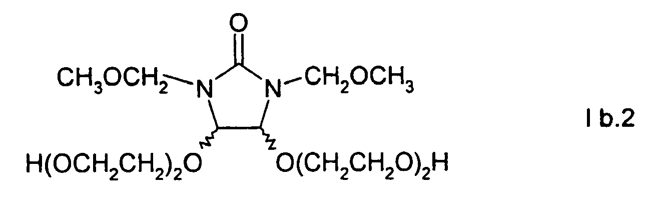

Man erhielt erfindungsgemäßen modifizierten Schaumstoff S2.1.

### II.3 Herstellung von erfindungsgemäßen modifizierten Schaumstoffen

Man kontaktierte mehrere unmodifizierte Schaumstoffstücke aus Beispiel I.1 mit einem Gewicht gemäß Tabelle 1 mit einer wässrigen Dispersion, enthaltend
112,5 g/l (I b.2) und
61,4 g/l MgCl₂·6 H₂O,
indem man je einen Schaumstoffquader vollständig in die wässrige Dispersion tauchte und 2 Minuten mit wässriger Dispersion bedeckt ließ. Anschließend entnahm man die Schaumstoffquader aus der betreffenden wässrigen Dispersion und quetschte überschüssige wässrige Dispersion ab, indem man durch zwei sich gegenläufig drehende Walzen führte, die einen Durchmesser von 150 mm und einen Abstand von 5 mm aufwiesen und sich mit einer Geschwindigkeit von 32 Umdrehungen/min drehten. Dadurch wurde eine Flottenaufnahme von 110 Gew.-% erreicht.

Danach trocknete man über einen Zeitraum von einer Stunde bei 80°C im Trockenschrank. Anschließend wurde im Trockenschrank 10 Minuten bei 160 °C thermisch fixiert. Man erhielt erfindungsgemäßen modifizierten Schaumstoff S2.2.

### II.4 Herstellung von erfindungsgemäßem modifizierten Schaumstoff S2.3

Man kontaktierte mehrere unmodifizierte Schaumstoffstücke aus Beispiel I.1 mit einem Gewicht gemäß Tabelle 1 mit einer wässrigen Dispersion, enthaltend
60 g/l (I b.2) und
25 g/l MgCl₂·6 H₂O,
indem man je einen Schaumstoffquader vollständig in die wässrige Dispersion tauchte und 2 Minuten mit wässriger Dispersion bedeckt ließ. Anschließend entnahm man die Schaumstoffquader aus der betreffenden wässrigen Dispersion und quetschte überschüssige wässrige Dispersion ab, indem man durch zwei sich gegenläufig drehende Walzen führte, die einen Durchmesser von 150 mm und einen Abstand von 8 mm aufwiesen und sich mit einer Geschwindigkeit von 32 Umdrehungen/min drehten. Dadurch wurde eine Flottenaufnahme von 725 Gew.-% erreicht.

Danach fixierte man thermisch im Trockenschrank 10 Minuten bei 150 °C (ohne vorheriges Trocknen). Man erhielt erfindungsgemäßen modifizierten Schaumstoff S2.3.

### II.5 Herstellung von erfindungsgemäßem modifizierten Schaumstoff S2.4

Man ging vor wie in Beispiel II.4 beschrieben, jedoch trocknete man vor dem Fixieren 2 Stunden bei 80°C im Trockenschrank und fixierte thermisch 5 Minuten bei 180°C. Man erhielt erfindungsgemäßen modifizierten Schaumstoff S2.4.

Die Flottenaufnahme wurde vor dem Trocknen bestimmt und ergab einen Wert von 450 Gew.%.

**Tabelle 1: Erfindungsgemäße modifizierte Schaumstoffe (Angabe in Gew.-% bezogen auf das Gewicht des unmodifizierten Schaumstoffs)**

| (b) | Erfindungsgemäßer modifizierter Schaumstoff Nr. | Gewicht unmodifizierter Schaumstoffquader [g] | Gewicht erfindungsgemäßer modifizierter Schaumstoff [g] | Δ [Gew.-%] |
|---|---|---|---|---|
| (b I.1) | S1.1 | 1,09 | 1,57 | 44 |
| (b I.1) | S1.2 | 1,21 | 2,0 | 65 |
| (b I.2) | S2.1 | 1,13 | 1,67 | 48 |
| (b I.2) | S2.2 | 1,22 | 1,37 | 12 |
| (b I.2) | S2.3 | 1,15 | 1,65 | 43 |
| (b I.2) | S2.4 | 1,11 | 1,41 | 27 |

### III. Verwendung von erfindungsgemäßen modifizierten Schaumstoffen und nicht modifizierten Schaumstoffen als Putztücher

Erfindungsgemäße modifizierte Schaumstoffe und unmodifizierter Schaumstoff wurden jeweils als Putzschwämme verwendet.

Man feuchtete erfindungsgemäße modifizierte Schaumstoffe und unmodifizierten Schaumstoff jeweils mit Wasser an.

Man putzte über einen Zeitraum von 2 Minuten manuell je etwa 1 m² einer gestrichenen Gipskartonwand (rau), die mit Streifen von Gummiabrieb, Schuhcreme und Altöl verschmutzt war, mit je einem der erfindungsgemäßen modifizierten Schaumstoffe aus I.2 bzw. II. und mit unmodifiziertem Schaumstoff gemäß 1.1. Man erhielt geputzte Wände gemäß Tabelle 2, bei denen die Putzqualität auf optischen Eindruck beurteilt wurden. Weiterhin wurde die Formstabilität der Putzschwämme optisch beurteilt.

**Tabelle 2: Unmodifizierter Schaumstoff (a.1) aus I.1, erfindungsgemäße modifizierte Schaumstoffe und ihre Verwendung als Putzschwämme**

| Schaumstoff | Putzqualität | Formstabilität Schaumstoff |
|---|---|---|
| (a.1) | befriedigend | Nach 2 Minuten starker Verlust der Form |
| (b I.1) | Sehr gut | Kein Formverlust |
| (b I.1) | Sehr gut | Kein Formverlust |
| (b I.2) | Sehr gut | Kein Formverlust |
| (b I.2) | gut | leichter Formverlust |
| (b I.2) | Sehr gut | Kein Formverlust |
| (b I.2) | Sehr gut | leichter Formverlust |

### IV. Herstellung von weiteren erfindungsgemäßen modifizierten Schaumstoffen

Man schnitt unmodifizierten Schaumstoff (a.1) aus Beispiel I.1 zu Schaumstoffquadern mit den Abmessungen 10 cm·10 cm·0,5 cm. Die Schaumstoffquader wogen im Bereich von 0,35 bis 0,48 g.

### IV.1 Herstellung von erfindungsgemäß modifiziertem Schaumstoff S1.3

Man kontaktierte einen Schaumstoffquader aus IV. mit einem Gewicht von 0,44 g mit einer wässrigen Dispersion von
81 g/l (b I.1) und
18 g g/l MgCl₂·6 H₂O, indem man ihn vollständig in die wässrige Dispersion tauchte und zwei Minuten mit wässriger Dispersion bedeckt ließ. Anschließend entnahm man die Schaumstoffquader aus der betreffenden wässrigen Dispersion und quetschte überschüssige wässrige Dispersion ab, indem man durch zwei sich gegenläufig drehende Walzen führte, die einen Durchmesser von 150 mm und einen Abstand von 2 mm aufwiesen und sich mit einer Geschwindigkeit von 32 Umdrehungen/min drehten. Dadurch wurde eine Flottenaufnahme von 420 % erreicht.

Danach trocknete man über einen Zeitraum von 4 Stunden bei 80°C im Trockenschrank. Anschließend wurde im Trockenschrank 10 Minuten bei 150 °C thermisch fixiert. Es resultierte eine Belegung von 34 Gew.-%, bezogen auf unmodifizierten Schaumstoff.

Danach befeuchtete man den behandelten Schaumstoff mit Wasser und kalandrierte, indem man ihn zehnmal durch zwei sich gegenläufig drehende Walzen mit 3,5-4 bar Anpressdruck führte, wobei der behandelte Schaumstoff etwa auf ein Drittel seiner ursprünglichen Dicke gepresst (mechanisch komprimiert) wurde. Man erhielt erfindungsgemäßen modifizierten Schaumstoff S1.3, der einen angenehm weichen tuchartigen Griff aufwies und flexibel war.

### IV.2 Herstellung von erfindungsgemäß modifiziertem Schaumstoff S1.4

Man kontaktierte einen Schaumstoffquader aus IV. mit einem Gewicht von 0,44 g mit einer wässrigen Dispersion von
81 g/l (b 1.1) und
18 g g/l MgCl₂·6 H₂O, indem man ihn vollständig in die wässrige Dispersion tauchte. Nach 5 Sekunden entnahm man die Schaumstoffquader aus der betreffenden wässrigen Dispersion und quetschte überschüssige wässrige Dispersion ab, indem man durch zwei sich gegenläufig drehende Walzen führte, die einen Durchmesser von 150 mm und einen Abstand von 2 mm aufwiesen und sich mit einer Geschwindigkeit von 32 Umdrehungen/min drehten. Dadurch wurde eine Flottenaufnahme von 420 % erreicht.

Danach kalandrierte man, indem man den behandelten Schaumstoff zwölfmal durch zwei sich gegenläufig drehende Walzen mit 3,5-4 bar Anpressdruck führte, wobei der behandelte Schaumstoff etwa auf ein Drittel seiner ursprünglichen Dicke gepresst (mechanisch komprimiert) wurde. Anschließend fixierte man 15 Minuten bei 150°C im Trockenschrank. Es resultierte eine Belegung von 34 Gew.%, bezogen auf unmodifizierten Schaumstoff. Man erhielt erfindungsgemäßen modifizierten Schaumstoff S1.4, der einen angenehm weichen tuchartigen Griff aufwies und flexibel war.

### IV.3 Herstellung von erfindungsgemäßem modifizierten Schaumstoff S2.5

Man besprühte einen Schaumstoffquader aus IV. mit einem Gewicht von 0,48 g mit dem 3,9-fachen einer wässrigen Dispersion, enthaltend
112,5 g/l (I b.2) und
61,4 g/l MgCl₂·6 H₂O.

Man ließ 2 Minuten einwirken, quetschte anschließend überschüssige wässrige Dispersion ab, indem man durch zwei sich gegenläufig drehende Walzen führte, die einen Durchmesser von 150 mm und einen Abstand von 2 mm aufwiesen und sich mit einer Geschwindigkeit von 32 Umdrehungen/min drehten. Man erreichte eine Flottenaufnahme von 325 Gew.-% und eine Belegung von 37 Gew.-%.

Danach fixierte man thermisch im Trockenschrank 15 Minuten bei 150 °C (ohne vorheriges Trocknen).

Danach befeuchtete man den behandelten Schaumstoff mit Wasser und kalandrierte, indem man ihn fünfzehnmal durch zwei sich gegenläufig drehende Walzen mit 3,5 - 4 bar Anpressdruck führte, wobei der behandelte Schaumstoff etwa auf 40% seiner ursprünglichen Dicke gepresst (mechanisch komprimiert) wurde. Man erhielt erfindungsgemäßen modifizierten Schaumstoff S2.5, der einen angenehm weichen tuchartigen Griff aufwies und flexibel war.

### IV.4 Herstellung von erfindungsgemäßem modifizierten Schaumstoff S2.6

Man kontaktierte einen Schaumstoffquader aus IV. mit einem Gewicht von 0,42 g vollständig in eine wässrige Dispersion, enthaltend
112,5 g/l (I b.2) und
61,4 g/l MgCl₂·6 H₂O,
indem man ihn vollständig in die wässrige Dispersion tauchte. Man ließ 2 Minuten einwirken, quetschte anschließend überschüssige wässrige Dispersion ab, indem man durch zwei sich gegenläufig drehende Walzen führte, die einen Durchmesser von 150 mm und einen Abstand von 2 mm aufwiesen und sich mit einer Geschwindigkeit von 32 Umdrehungen/min drehten. Man erreichte eine Flottenaufnahme von 360 Gew.-% und eine Belegung von 41 Gew.-%.

Danach trocknete man eine Stunde bei 80°C im Trockenschrank und fixierte man thermisch im Trockenschrank 7,5 Minuten bei 160 °C.

Danach befeuchtete man den behandelten Schaumstoff mit Wasser und komprimierte mechanisch, indem man ihn zehnmal mit einer Plattenpresse auf etwa ein Drittel seiner ursprünglichen Dicke presste. Man erhielt erfindungsgemäßen modifizierten Schaumstoff S2.6, der sich wie weiches Leder anfühlte und sehr flexibel war.

### IV.5 Herstellung von erfindungsgemäßem modifiziertem Schaumstoff S2.7

Man kontaktierte einen Schaumstoffquader aus IV. mit einem Gewicht von 0,46 g mit einer wässrigen Dispersion, enthaltend
60 g/l (I b.2) und
25 g/l MgCl₂·6 H₂O,
indem man ihn vollständig in die wässrige Dispersion tauchte und 2 Minuten mit wässriger Dispersion bedeckt ließ. Anschließend entnahm man die Schaumstoffquader aus der betreffenden wässrigen Dispersion und quetschte überschüssige wässrige Dispersion ab, indem man durch zwei sich gegenläufig drehende Walzen führte, die einen Durchmesser von 150 mm und einen Abstand von 2 mm aufwiesen und sich mit einer Geschwindigkeit von 32 Umdrehungen/min drehten. Dadurch wurde eine Flottenaufnahme von 725 Gew.-% erreicht.

Danach fixierte man thermisch im Trockenschrank 10 Minuten bei 150 °C (ohne vorheriges Trocknen).

Danach befeuchtete man den behandelten Schaumstoff mit Wasser und kalandrierte, indem man ihn zehnmal durch zwei sich gegenläufig drehende Walzen mit 3,5 - 4 bar Anpressdruck führte, wobei der behandelte Schaumstoff etwa auf ein Drittel seiner ursprünglichen Dicke gepresst (mechanisch komprimiert) wurde. Man erhielt erfindungsgemäßen modifizierten Schaumstoff S2.7, der einen angenehm weichen tuchartigen Griff aufwies und flexibel war.

### IV.6 Herstellung von erfindungsgemäßem modifiziertem Schaumstoff S2.8

Man kontaktierte einen Schaumstoffquader aus IV. mit einem Gewicht von 0,35 g mit einer wässrigen Dispersion, enthaltend
60 g/l (I b.2) und
25 g/l MgCl_{2·}6 H₂O,
indem man ihn vollständig in die wässrige Dispersion tauchte und 2 Minuten mit wässriger Dispersion bedeckt ließ. Anschließend entnahm man die Schaumstoffquader aus der betreffenden wässrigen Dispersion und quetschte überschüssige wässrige Dispersion ab, indem man durch zwei sich gegenläufig drehende Walzen führte, die einen Durchmesser von 150 mm und einen Abstand von 2 mm aufwiesen und sich mit einer Geschwindigkeit von 32 Umdrehungen/min drehten. Dadurch wurde eine Flottenaufnahme von 710 Gew.-% erreicht.

Danach trocknete man zunächst 2 Stunden bei 80°C im Trockenschrank. Danach fixierte man thermisch im Trockenschrank 5 Minuten bei 180 °C.

Danach befeuchtete man den behandelten Schaumstoff mit Wasser und komprimierte mechanisch, indem man ihn zehnmal mit einer Plattenpresse auf etwa ein Drittel seiner ursprünglichen Dicke presste. Man erhielt erfindungsgemäßen modifizierten Schaumstoff S2.8, der sich wie weiches Fensterleder anfühlte und sehr flexibel war.

### V. Verwendung von erfindungsgemäßen modifizierten Schaumstoffen aus IV. und nicht modifizierten Schaumstoffen als Putztücher

Erfindungsgemäße modifizierte Schaumstoffe und unmodifizierter Schaumstoff wurden jeweils als Putztücher zur Reinigung einer empfindlichen Oberfläche aus Plexiglas verwendet.

Aus unmodifiziertem Schaumstoff (a.1) und aus erfindungsgemäß modifiziertem Schaumstoff aus IV. wurden jeweils ca. 0,5 cm dicke kreisförmige Scheiben (Durchmesser: 4,5 cm) ausgeschnitten und auf ein Gewicht (ca. 1600 g) aufgeklebt. Man erhielt Prüflinge. Die Prüflinge wurden mit Wasser angefeuchtet und mit Hilfe eines "Prüfbau-Quant-Scheuerprüfers" ca. 2000 mal über Plexiglas gerieben. Zur Beurteilung, ob die erfindungsgemäßen Schaumstoffe die Oberfläche des Plexiglases weniger zerkratzen als der unbehandelte Schaumstoff, wurde die Kratzer auf der Reibfläche in mikroskopischer Vergrößerung (1 : 75) gezählt.

Mit dem unbehandelten Schaumstoff (a.1) wurden durchschnittlich 31 Kratzer verursacht;

| | |
|---|---|
| mit S1.4 | 9 Kratzer, |
| mit S2.5 | 2 Kratzer, |
| mit S2.7 | 7 Kratzer. |

### VI. Verwendung von erfindungsgemäßen modifizierten Schaumstoffen als Band

Auf ein Stück Leinengewebe mit den Abmessungen 5 cm ·5 cm wurde erfindungsgemäß modifizierter Schaumstoff I.2 mit Hilfe eines Klebstoffs auf Basis von Silikonkautschuk aufgeklebt. Man erhielt einen erfindungsgemäßen Verbund. Man lagerte den erfindungsgemäßen Verbund 24 Stunden, befeuchtete ihn mit Wasser und reinigte mit ihm eine Münze (1 Euro-Cent-Stück) 10 Sekunden manuell. Die Münze war anschließend sauber, die Prägung durch die Reinigung nicht verkratzt.

Der erfindungsgemäße Verbund ließ sich manuell mehrfach knicken und knüllen, was er schadlos überstand.

## Patentansprüche

1. Verfahren zur Herstellung von modifizierten offenzelligen Aminoplastschaumstoffen, **dadurch gekennzeichnet, dass** man
(a) offenzellige Aminoplastschaumstoffe mit einer Dichte im Bereich von 5 bis 500 kg/m³ und einem mittleren Porendurchmesser im Bereich von 1 µm bis 1 mm
(b) mit wässriger Formulierung von mindestens einer Verbindung der allgemeinen Formel I a bis I b kontaktiert 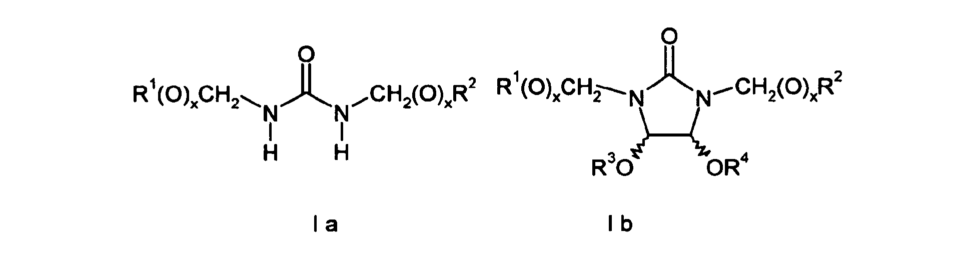 wobei die Variablen wie folgt gewählt sind:
R¹, R² gleich oder verschieden und gewählt aus Wasserstoff, C₁-C₁₂-Alkyl, verzweigt oder unverzweigt, (-CH₂-CH₂-O)ₘ-R⁵, (-CHCH₃-CH₂-O)ₘ-R⁵, (-CH₂-CHCH₃-O)ₘ-R⁵, (-CH₂-CH₂-CH₂-O)ₘ-R⁵, (-CH₂-CH₂-CH₂-CH₂-O)ₘ-R⁵,
x gleich oder verschieden und eine ganze Zahl gewählt aus null und eins, wobei in Formel I a mindestens ein x gleich 1 gewählt wird,
m ist eine ganze Zahl im Bereich von 1 bis 20,
R³, R⁴ gleich oder verschieden und gewählt aus Wasserstoff, C₁-C₁₂-Alkyl, verzweigt oder unverzweigt, oder gemeinsam C₂-C₄-Alkylen
R⁵ gleich oder verschieden und gewählt aus C₁-C₄-Alkyl und Wasserstoff.

2. Verfahren nach Anspruch 1, **dadurch gekennzeichnet, dass** mindestens eine Verbindung aus Schritt (b) nicht bei der Herstellung von offenzelligem Aminoplastschaumstoff (a) eingesetzt worden ist.

3. Verfahren nach Anspruch 1 oder 2, **dadurch gekennzeichnet, dass** man Verbindung (b) erhält durch Kondensation mindestens einer Stickstoff-haltigen Verbindung (B1) und mindestens einer Carbonylverbindung (B2) und gegebenenfalls weiteren Verbindungen (B3) und gegebenenfalls weiteren Umsetzungen nach der Kondensation.

4. Verfahren nach einem der Ansprüche 1 bis 3, **dadurch gekennzeichnet, dass** man zusätzlich mit
(c) mindestens einem Katalysator
kontaktiert.

5. Verfahren nach einem der Ansprüche 1 bis 4, **dadurch gekennzeichnet, dass** man weiterhin mit mindestens einem Zuschlagstoff (d) kontaktiert, wobei Zuschlagstoffe (d) gewählt werden aus Bioziden, Tensiden, Aktivkohle, Farbmitteln, Riechstoffen, Geruchsfängern und Mikrokapseln, gefüllt mit mindestens einem Wirkstoff.

6. Verfahren nach einem der Ansprüche 1 bis 5, **dadurch gekennzeichnet, dass** man nach dem Kontaktieren von offenzelligem Aminoplastschaumstoff (a), wässriger Formulierung von Verbindung der allgemeinen Formel I a bis I b, gegebenenfalls Katalysator (c) und gegebenenfalls mindestens einem Zuschlagstoff (d) einwirken lässt und danach mechanisch komprimiert.

7. Verfahren nach einem der Ansprüche 1 bis 6, **dadurch gekennzeichnet, dass** man nach dem Kontaktieren von offenzelligem Aminoplastschaumstoff (a), wässriger Formulierung von Verbindung der allgemeinen Formel I a bis I b, gegebenenfalls Katalysator (c) und gegebenenfalls mindestens einem Zuschlagstoff (d) einwirken lässt und danach thermisch fixiert.

8. Verfahren nach einem der Ansprüche 1 bis 6, **dadurch gekennzeichnet, dass** man nach dem Kontaktieren von offenzelligem Aminoplastschaumstoff (a), wässriger Formulierung von Verbindung der allgemeinen Formel I a bis I b, gegebenenfalls Katalysator (c) und gegebenenfalls mindestens einem Zuschlagstoff (d) einwirken lässt, danach mechanisch komprimiert und danach thermisch fixiert.

9. Verfahren nach einem der Ansprüche 1 bis 8, **dadurch gekennzeichnet, dass** es sich bei offenzelligen Aminoplastschaumstoffen um (a) Melamin-Schaumstoffe handelt.

10. Modifizierte offenzellige Aminoplastschaumstoffe, erhältlich nach einem Verfahren nach einem der Ansprüche 1 bis 9.

11. Verwendung von modifizierten offenzelligen Aminoplastschaumstoffen, hergestellt nach einem Verfahren nach einem der Ansprüche 1 bis 9, als oder zur Herstellung von Reinigungsmaterialien, Filtern, Luftbefeuchtern, kosmetischen Artikeln, Wasserverteilern, Verpackungselementen, Schallschutzelementen oder Gebäudeisolierungen.

12. Verfahren zur Herstellung von Reinigungsmaterialien, Filtern, Luftbefeuchtern, kosmetischen Artikeln, Wasserverteilern, Verpackungselementen, Schallschutzelementen oder Gebäudeisolierungen unter Verwendung von modifizierten offenzelligen Aminoplastschaumstoffen, hergestellt nach einem Verfahren nach einem der Ansprüche 1 bis 9.

13. Verfahren zum Aufbringen von modifizierten offenzelligen Aminoplastschaumstoffen, hergestellt nach einem Verfahren nach einem der Ansprüche 1 bis 9, auf einem gebogenen oder flachen, starren oder flexiblen Träger.

14. Verbund, enthaltend mindestens einen modifizierten offenzelligen Aminoplastschaumstoff, hergestellt nach einem Verfahren nach einem der Ansprüche 1 bis 9, auf einem gebogenen oder flachen, starren oder flexiblen Träger.

## Claims

1. A process for production of modified open-cell aminoplastic foams, which comprises bringing the following materials into contact
(a) open-cell aminoplastic foams with density in the range from 5 to 500 kg/m³ and average pore diameter in the range from 1 µm to 1 mm, and
(b) aqueous formulation of at least one compound of the general formula I a to Ib 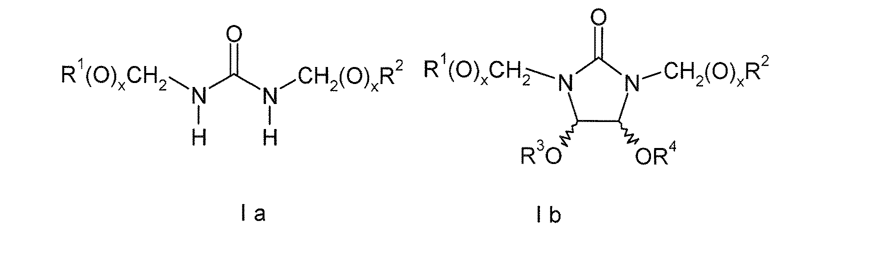 where the selected variables are as follows:
R¹ and R² are identical or different and are selected from hydrogen, C₁-C₁₂- alkyl, branched or unbranched, (-CH₂-CH₂-O)ₘ-R⁵, (-CHCH₃-CH₂-O)ₘ- R⁵, (-CH₂-CHCH₃-O)ₘ-R⁵, (-CH₂-CH₂-CH₂-O)ₘ-R⁵, (-CH₂-CH₂-CH₂-CH₂-O)ₘ-R⁵,
x are identical or different and are a whole number selected from zero and one, at least one x in formula I a being selected to be equal to 1,
m is a whole number in the range from 1 to 20,
R³ and R⁴ are identical or different and are selected from hydrogen, C₁-C₁₂- alkyl, branched or unbranched, or together are C₂-C₄-alkylene,
R⁵ are identical or different and are selected from C₁-C₄-alkyl and hydrogen.

2. The process according to claim 1, wherein at least one compound from step (b) has not been used during production of open-cell aminoplastic foam (a).

3. The process according to claim 1 or 2, wherein compound (b) is obtained via condensation of at least one nitrogen-containing compound (B1) and of at least one carbonyl compound (B2), and optionally of other compounds (B3), and optionally further reactions after the condensation process.

4. The process according to any of claims 1 to 3, wherein the material is also brought into contact with
(c) at least one catalyst.

5. The process according to any of claims 1 to 4, wherein the material is also brought into contact with at least one additive (d), these additives (d) being selected from biocides, surfactants, activated charcoal, colorants, fragrances, odor scavengers, and microcapsules, charged with at least one active ingredient.

6. The process according to any of claims 1 to 5, wherein, after open-cell aminoplastic foam (a) has been brought into contact with aqueous formulation of compound of the general formula la to lb, and optionally with catalyst (c), and optionally with at least one additive (d) the materials are allowed to interact and mechanical compression is then carried out.

7. The process according to any of claims 1 to 6, wherein, after open-cell aminoplastic foam (a) has been brought into contact with aqueous formulation of compound of the general formula la to Ib, and optionally with catalyst (c), and optionally with at least one additive (d) the materials are allowed to interact and heat-setting is then carried out.

8. The process according to any of claims 1 to 6, wherein, after open-cell aminoplastic foam (a) has been brought into contact with aqueous formulation of compound of the general formula la to Ib, and optionally with catalyst (c), and optionally with at least one additive (d) the materials are allowed to interact, and mechanical compression and heat-setting are then carried out.

9. The process according to any of claims 1 to 8, wherein the open-cell aminoplastic foams (a) are melamine foams.

10. A modified open-cell aminoplastic foam, obtainable by a process according to any of claims 1 to 9.

11. The use of modified open-cell aminoplastic foams, produced by a process according to any of claims 1 to 9, as, or for production of, cleaning materials, filters, humidifiers, cosmetics items, water distributors, packaging elements, sound-deadening elements, or buildings-insulation materials.

12. A process for production of cleaning materials, of filters, of humidifiers, of cosmetics items, of water distributors, of packaging elements, of sound-deadening elements, or of buildings-insulation materials, using modified open-cell aminoplastic foams, produced by a process according to any of claims 1 to 9.

13. A process for applying modified open-cell aminoplastic foams produced by a process according to any of claims 1 to 9 to a curved or flat, rigid or flexible support.

14. A composite, comprising at least one modified open-cell aminoplastic foam produced by a process according to any of claims 1 to 9 to a curved or flat, rigid or flexible support.

## Revendications

1. Procédé pour la production de mousses aminoplaste à cellules ouvertes, modifiées, **caractérisé en ce qu'**on met en contact
(a) des mousses aminoplaste à cellules ouvertes, ayant une densité dans la plage de 5 à 500 kg/m³ et un diamètre moyen de pore dans la plage de 1 µm à 1 mm
(b) avec une composition aqueuse d'au moins un composé de formule générale Ia à Ib 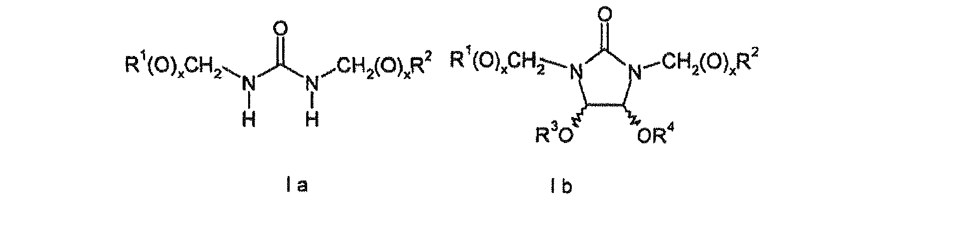 les variables étant choisies comme suit :
R¹, R² sont identiques ou différents et choisis parmi un atome d'hydrogène, un groupe alkyle en C₁-C₁₂, ramifié ou non ramifié, (-CH₂-CH₂-O)ₘ-R⁵, (-CHCH₃-CH₂-O)ₘ-R⁵, (-CH₂-CHCH₃-O)ₘ-R⁵, (-CH₂-CH₂-CH₂-O)ₘ-R⁵, (-CH₂-CH₂-CH₂-CH₂-O)ₘ-R⁵,
x est le même ou différent et est un nombre entier choisi parmi zéro et un, dans la formule Ia au moins un x étant égal à 1,
m est un nombre entier dans la plage de 1 à 20,
R³, R⁴ sont identiques ou différents et choisis parmi un atome d'hydrogène, un groupe alkyle en C₁-C₁₂, ramifié ou non ramifié, ou forment ensemble un groupe alkylène en C₂-C₄
R⁵ est le même ou différent et est choisi parmi un groupe alkyle en C₁-C₄ et un atome d'hydrogène.

2. Procédé selon la revendication 1, **caractérisé en ce qu'**au moins un composé provenant de l'étape (b) n'a pas été utilisé dans la production de la mousse aminoplaste (a) à cellules ouvertes.

3. Procédé selon la revendication 1 ou 2, **caractérisé en ce qu'**on obtient le composé (b) par condensation d'au moins un composé azoté (B1) et d'au moins un composé carbonyle (B2) et éventuellement d'autres composés (B3) et éventuellement d'autres réactions après la condensation.

4. Procédé selon l'une quelconque des revendications 1 à 3, **caractérisé en ce qu'**en outre on met en contact avec
(c) au moins un catalyseur

5. Procédé selon l'une quelconque des revendications 1 à 4, **caractérisé en ce qu'**en outre on met en contact avec au moins un addditif (d), les additifs (d) étant choisis patmi des biocides, des tensioactifs, le charbon actif, des agents colorants, des substances odorantes, des absorbeurs d'odeurs et des microcapsules remplies avec au moins une substance active.

6. Procédé selon l'une quelconque des revendications 1 à 5, **caractérisé en ce qu'**après la mise en contact de la mousse aminoplaste à cellules ouvertes (a), de la composition aqueuse du composé de formule générale Ia à Ib, éventuellement du catalyseur (c) et éventuellement d'au moins un additif (d) on laisse agir et ensuite on comprime mécaniquement.

7. Procédé selon l'une quelconque des revendications 1 à 6, **caractérisé en ce qu'**après la mise en contact de la mousse aminoplaste à cellules ouvertes (a), de la composition aqueuse du composé de formule générale Ia à Ib, éventuellement du catalyseur (c) et éventuellement d'au moins un additif (d) on laisse agir, et ensuite on fixe thermiquement.

8. Procédé selon l'une quelconque des revendications 1 à 6, **caractérisé en ce qu'**après la mise en contact de la mousse aminoplaste à cellules ouvertes (a), de la composition aqueuse du composé de formule générale Ia à Ib, éventuellement du catalyseur (c) et éventuellement d'au moins un additif (d) on laisse agir, puis on comprime mécaniquement et ensuite on fixe thermiquement.

9. Procédé selon l'une quelconque des revendications 1 à 8, **caractérisé en ce que** les mousses aminoplaste à cellules ouvertes consistent en (a) des mousses mélamine.

10. Mousses aminoplaste à cellules ouvertes, modifiées, pouvant être obtenues conformément à un procédé selon l'une quelconque des revendications 1 à 9.

11. Utilisation de mousses aminoplaste à cellules ouvertes, modifiées, produites conformément à un procédé selon l'une quelconque des revendications 1 à 9, en tant que ou pour la fabrication de matériaux de nettoyage, de filtres, d'humidificateurs d'air, d'articles cosmétiques, de distributeurs d'eau, d'éléments d'emballage, d'éléments insonorisants ou d'isolations de bâtiments.

12. Procédé pour la fabrication de matériaux de nettoyage, de filtres, d'humidificateurs d'air, d'articles cosmétiques, de distributeurs d'eau, d'éléments d'emballage, d'éléments insonorisants ou d'isolations de bâtiments, avec utilisation de mousses aminoplaste à cellules ouvertes, modifiées, produites conformément à un procédé selon l'une quelconque des revendications 1 à 9.

13. Procédé pour l'application de mousses aminoplaste à cellules ouvertes, modifiées, produites conformément à un procédé selon l'une quelconque des revendications 1 à 9, sur un support plat ou courbé, rigide ou flexible.

14. Composite, contenant au moins une mousse aminoplaste à cellules ouvertes, modifiée, produite conformément à un procédé selon l'une quelconque des revendications 1 à 9, sur un support plat ou courbé, rigide ou flexible.
